(19) Europäisches Patentamt
European Patent Office
Office européen des brevets

(11) Veröffentlichungsnummer: **0 424 461 B1**

(12) # EUROPÄISCHE PATENTSCHRIFT

(45) Veröffentlichungstag der Patentschrift: **13.04.94**

(51) Int. Cl.$^5$: **C09K 19/38**, C08F 20/30, C08F 20/10

(21) Anmeldenummer: **89908703.5**

(22) Anmeldetag: **29.06.89**

(86) Internationale Anmeldenummer:
**PCT/EP89/00749**

(87) Internationale Veröffentlichungsnummer:
**WO 90/00587 (25.01.90 90/03)**

(54) **Neue ferroelektrische flüssigkristalline Polymere, ein Verfahren zu ihrer Herstellung und ihre Verwendung in elektrooptischen Bauteilen.**

(30) Priorität: **08.07.88 DE 3823153**

(43) Veröffentlichungstag der Anmeldung:
**02.05.91 Patentblatt 91/18**

(45) Bekanntmachung des Hinweises auf die Patenterteilung:
**13.04.94 Patentblatt 94/15**

(84) Benannte Vertragsstaaten:
**AT BE CH DE FR GB IT LI NL SE**

(56) Entgegenhaltungen:
**EP-A- 0 228 703**
**EP-A- 0 258 898**
**EP-A- 0 296 571**

(73) Patentinhaber: **HOECHST AKTIENGESELL-SCHAFT**

**D-65926 Frankturt(DE)**

(72) Erfinder: **Scherowsky, Günter**
**Winklerstrasse 18B**
**D-1000 Berlin 33(DE)**
Erfinder: **Mueller, Uwe**
**Heckerdamm 289C**
**D-1000 Berlin 13(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 424 461 B1

## Beschreibung

Flüssigkristalle haben in jüngerer Zeit Eingang in verschiedene technische Gebiete gefunden, in denen bestimmte elektro-optische Eigenschaften (z. B. kleine Ansteuerspannungen) in Verbindung mit bestimmten Anforderungen an Anzeige- oder Schaltvorrichtungen (z.B. flache Bauweise, geringes Gewicht) gefragt sind. Diese Vorrichtungen beruhen z.Z. auf dielektrischen Ausrichtungseffekten in nematischen, cholesterischen und/oder smektischen Flüssigkristallphasen, wobei die Lichtdurchlässigkeit oder -reflektivität der Vorrichtung von der angelegten elektrischen Spannung abhängt.

Ein Flüssigkristalldisplay besteht aus zwei Trägerplatten, vorzugsweise Glasplatten, die mit transparenten Elektroden und in der Regel mit einer oder zwei Orientierungsschichten beschichtet sind, zwischen denen sich die Flüssigkristallschicht befindet. Als weitere Komponenten sind Polarisatoren, Farbfilter, Passivierungs-, Antireflex-, Diffisionssperr- u.ä. Schichten gebräuchlich.

Während derzeit noch überwiegend nematische oder chloesterische Flüssigkristallphasen verwendet werden, haben seit einigen Jahren in zunehmendem Maße auch ferroelektrische, insbesondere smektische C*, Flüssigkristallphasen an Bedeutung gewonnen. Ferroelektrische Flüssigkristalle besitzen den Vorteil sehr kurzer Schaltzeiten und ermöglichen den Betrieb von hochauflösenden Bildschirmen ohne Zuhilfenahme elektronischer Elemente, wie z.B. Dünnschichttransistoren, die bei der Verwendung nematischer oder chloresterischer Flüssigkristallphasen erforderlich sind.

Bei allen genannten Anwendungen handelte es sich um niedermolekulare flüssigkristalline Verbindungen, d.h. mit Molmassen unterhalb von 2000 g/mol, vorzugsweise unterhalb von 800 g/mol, insbesondere aber nicht um Polymere, Copolymere, Polykondensate oder Copolykondensate. Wegen ihrer geringeren Viskosität besitzen niedermolekulare Flüssigkristalle im allgemeinen den Vorteil kurzer Schaltzeiten; dies gilt insbesondere für ferroelektrische Flüssigkristalle, deren Schaltzeiten im Bereich von $\mu$s liegen und die damit 10 bis 1000 mal schneller schalten als konventionelle nematische Flüssigkristallphasen.

Bei der Anwendung ferroelektrischer Flüssigkristalle kann jedoch das Problem der hohen Anfälligkeit der Orientierung hinsichtlich mechanischer Beanspruchung (Stoß, Schlag, Druck, thermische Verformung, Verbiegung usw.) auftreten, was zu einer irreversiblen Störung der Bildqualität eines Displays führen kann. Diese hohe Empfindlichkeit erschwert derzeit den Bau flexibler ferroelektrischer LC-Displays und verteuert die Herstellung konventioneller, d.h. mit Glas oder starren Kunststoffplatten versehenen, Displays.

Wegen ihrer geringeren Deformierbarkeit und besseren Verarbeitbarkeit ist die Verwendung polymerer Flüssigkristalle vorteilhaft; mit ihnen lassen sich flexible ferroelektrische Displays herstellen. In der EP-A-0228 703 sind ferroelektrische flüssigkristalline Polymere auf Basis von Polyacrylaten beschrieben, wobei jede Acrylsäure einheit eine Estergruppe trägt, die, in dieser Reihenfolge, eine Spacereinheit, eine mesogene Komponente und einen chiralen Endteil enthält. Die Schaltgeschwindigkeit dieser Verbindungen ist jedoch für manche Belange noch nicht ausreichend. Besonders vorteilhaft ist die Produktion einer Displayfolie in einem kontinuierlichen Prozeß, wozu jedoch schnell schaltende polymere ferroelektrische Flüssigkristalle benötigt werden. Daher bezieht sich die vorliegende Erfindung auf die Bereitstellung neuer polymerer, ferroelektrischer Flüssigkristalle.

Die neuen Verbindung stellen Polymere dar, die aus wiederkehrenden Einheiten der Formel (I) bestehen:

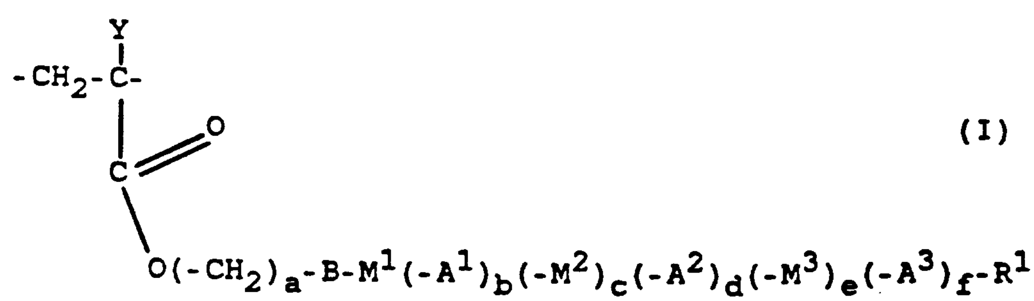

(I)

wobei

B = eine mindestens einfach chirale Gruppe der Formel

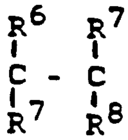 ; 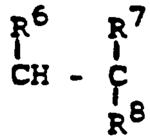 ; 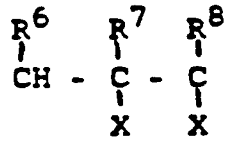 ;

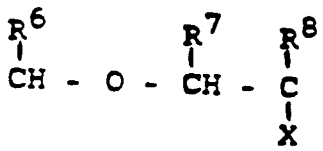 ; 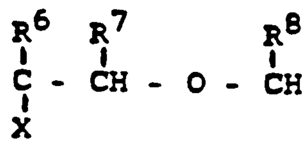 ; 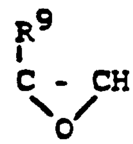

mit $R^6$, $R^7$, $R^8$ gleich oder verschieden H, $CH_3$, $OCH_3$, F, Cl, Br, wobei mindestens eine Gruppe $R^6$, $R^7$, $R^8$ gleich H sein muß und X = H, F, Cl, Br und $R^9$ = H, $C_1$-$C_{10}$-Alkyl,

Y = H, $CH_3$, F,

$R^1$ = geradkettiges oder verzweigtes (mit oder ohne asymmetrisches C-Atom) Alkyl oder Alkenyl mit 1 bis 16 C-Atomen, wobei auch eine oder zwei nichtbenachbarte $-CH_2-$Gruppen durch -O-, -S-, -CO-, -CO-O-, -O-CO- oder -O-CO-O- ersetzt sein können und wobei auch H durch F ersetzt sein kann, oder einer der nachfolgenden Reste

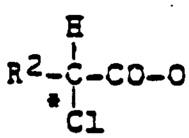
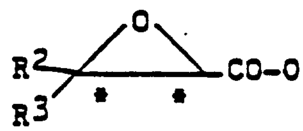
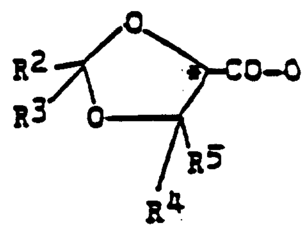

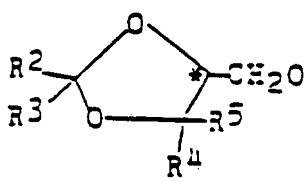
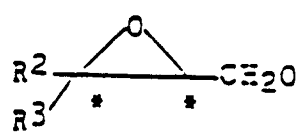
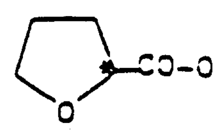

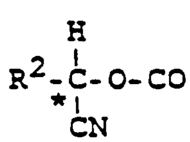
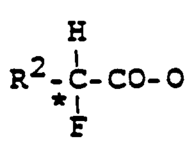
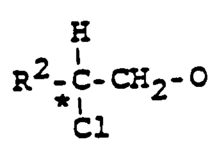

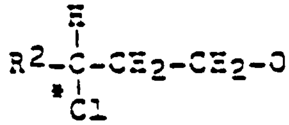
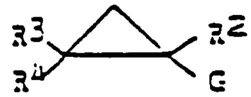

$R^2$, $R^3$, $R^4$, $R^5$ = H oder geradkettiges oder verzweigtes Alkyl mit 1 bis 16 oder Alkenyl mit 2 bis 16 C-Atomen, bei dem auch eine $-CH_2-$Gruppe durch - O-, -CO-O- oder -O-CO- ersetzt sein kann, oder $R^2$ und $R^3$ bzw. $R^4$ und $R^5$ zusammen oder cyclisches Alkyl mit 3

bis 8 C-Atomen

a = 2 bis 20, vorzugsweise 6 bis 12

b, c, d, e, f = 0 oder 1 mit der Maßgabe, daß d + e + f = 2 oder 3 ist

$A^1$, $A^2$, $A^3$ = gleich oder verschieden 1,4-Phenylen, bei dem 1 oder 2 H durch F, Cl und/oder CN ersetzt sein können, trans-1,4-Cyclohexylen, bei dem 1 oder 2 H durch F, Cl, CN und/oder $CH_3$ ersetzt sein können, Pyrazin-2,5-diyl, Pyridazin-3,6-diyl, Pyridin-2,5-diyl, Pyrimidin-2,5-diyl, (1,3,4)-Thiadiazol-2,5-diyl, 1,3-Dioxan-2,5-diyl, 1,3-Dithian-2,5-diyl.

$M^2$, $M^3$ = gleich oder verschieden CO-O, O-CO, CO-S, S-CO, $CH_2$-O, O-$CH_2$,

$M^1$ = O,

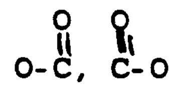

G = geradkettiges oder verzweigtes Alkylen mit 1 bis 16 C-Atomen oder Alkenylen mit 2 bis 16 C-Atomen, bei dem auch eine oder zwei nichtbenachbarte -$CH_2$-Gruppen durch -O-, -S-, -O-CO-, -CO-O-, S-CO- oder -CO-S- ersetzt sein können, bedeuten.

Bevorzugt werden dabei ferroelektrische flüssigkristalline Polymere bestehend aus wiederkehrenden Einheiten der Formel (I) bei denen die Gruppierung $(-A^1)_b(M^2)_c(-A^3)_d(-M^3)_e(-A^3)_f$- bedeutet:

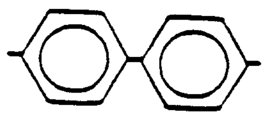 , 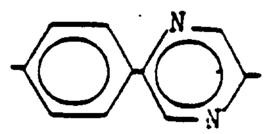 , 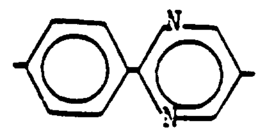 ,

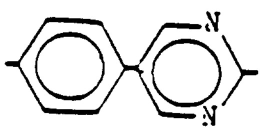 , 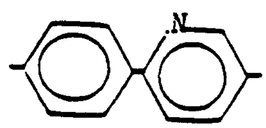 , 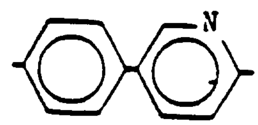 ,

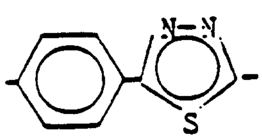 , 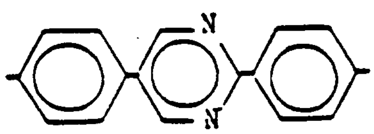 ,

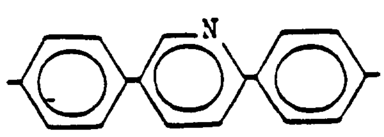 , 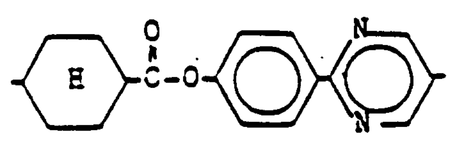 ,

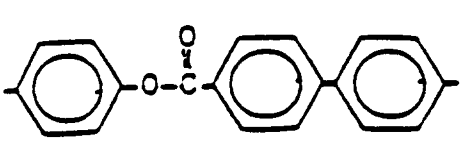 , 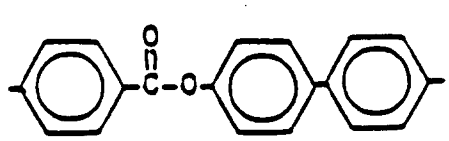 ,

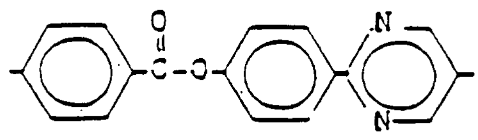 , 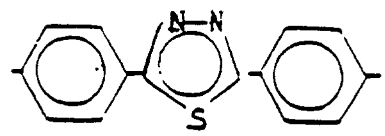

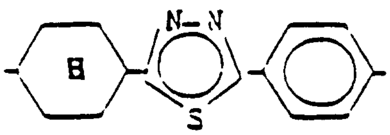 , 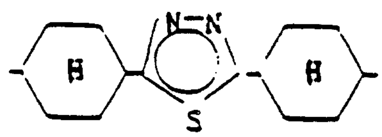 ,

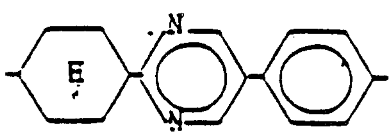 , 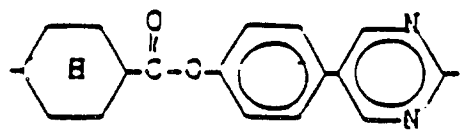

Besonders bevorzugt werden ferroelektrische, flüssigkristalline Polymere bestehend aus wiederkehrenden Einheiten der Formel (I) bei denen

Y = H, $CH_3$,

$R^1$ = geradkettiges oder verzweigtes (mit oder ohne asymmetrisches C-Atom) Alkyl oder Alkenyl mit 2 bis 16 C-Atomen, wobei auch eine oder zwei nichtbenachbarte $-CH_2$-Gruppen durch -O-, -S-, -CO-, -CO-O-, -O-CO- oder -O-CO-O- ersetzt sein können und wobei auch H durch F ersetzt sein kann, oder den Rest

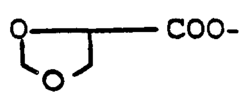 ,

a = 2 bis 20, vorzugsweise 6 bis 12, bedeuten und die Gruppierung $(-A^1)_b(-M^2)_c-(-A^2)_d(-M^3)_e(-A^3)_f-$ folgende Strukturen umfaßt:

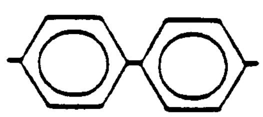 , 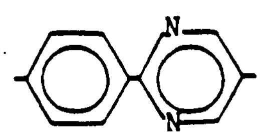 , 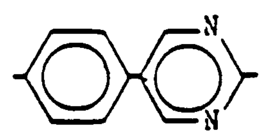

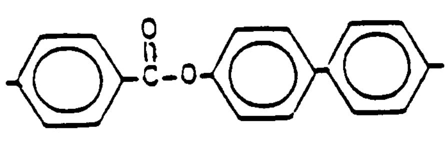 , 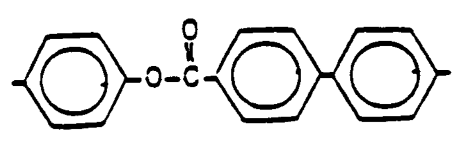

Besonders bevorzugt werden auch solche ferroelektrischen, flüssigkristallinen Polymere, die aus mindestens zwei verschiedenen Monomer-Einheiten der Formel (I) aufgebaut sind.

Die Herstellung dieser Verbindungen erfolgt durch Polymerisation der Monomeren der Formel (II)

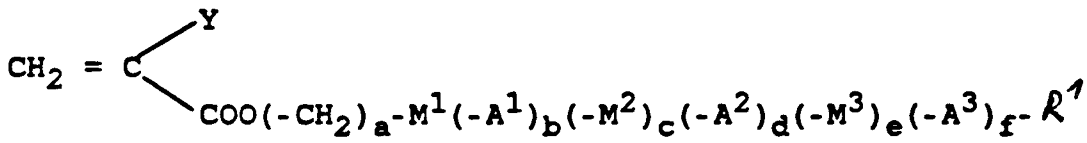
(II)

nach bekannten Verfahren mit einem radikalischen Starter.

Die Monomeren der obigen Formel können nach bekannten Methoden synthetisiert werden.

Die erfindungsgemäßen Polymere stellen ferroelektrische Flüssigkristalle dar, die Schaltzeiten von wenigen Millisekunden aufweisen und die sich in elektrooptischen Bauteilen und Anzeigevorrichtungen vorteilhaft einsetzen lassen.

**Beispiel 1**

Darstellung des Monomeren ($M_1$)

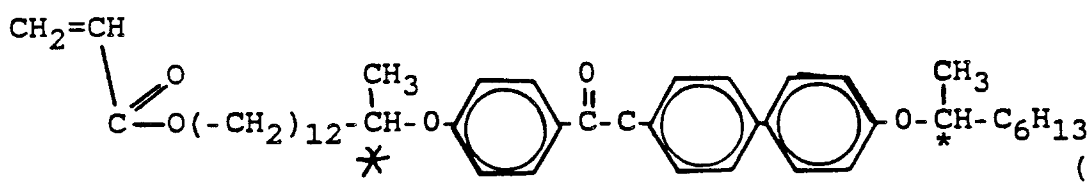
($M_1$)

(A) 12-4-[4-(Tetrahydropyran-2-yloxy)-benzoesäure]-4(1-methylheptyloxy)-biphenylester

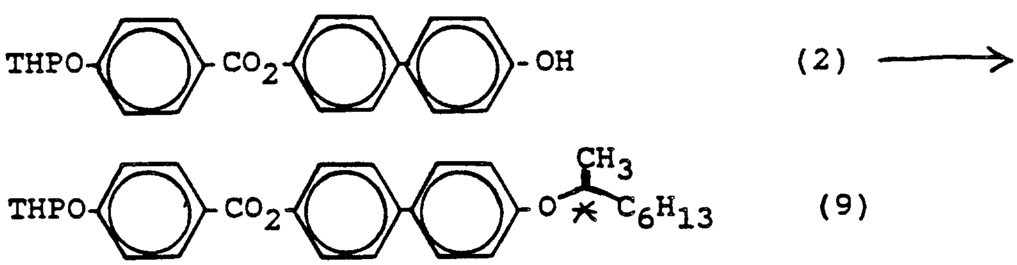
(2)

(9)

Zu einer Lösung von 3,00 g (7,7 mol) 2, 1,00 g (7,7 mol) S-(+)-2-Octanol, 2,02 g (7.7 mol) Triphenylphosphin in 100 ml abs. THF wurden bei 0-5°C unter Rühren und Feuchtgkeitsausschluß 1,34 g (7.7 mol) Azodicarbonsäurediethylester in 20 ml abs. THF innerhalb von 5 min getropft. Man läßt 48 h bei 20°C rühren.

Anschließend wird das Lösungsmittel abgezogen, mit 25 ml Ethanol versetzt, abfiltriert und der Niederschlag durch Flash-Säulenchromatographie (FSC) ($CH_2Cl_2$ IPE = 1:1) gereinigt.

Ausbeute: 2,06 g (4.1 mol) 53 %.

(B) 12-(+)-(4-Hydroxy-benzoesäure)-4(1-methylheptyloxy)-biphenylester (10)

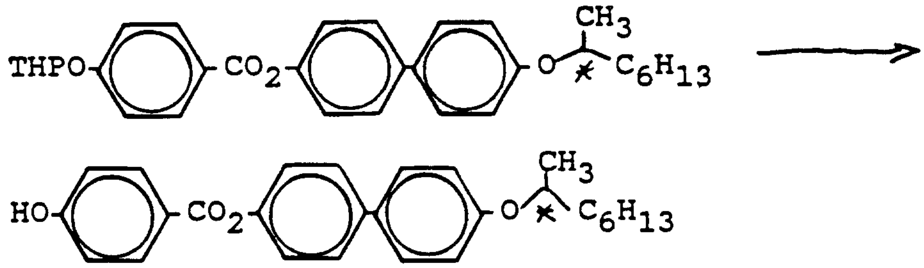

2 g (4 mmol) 9 wurden mit 100 ml Methanol versetzt und nach Zugabe von 0,15 g (0.6 mmol) PPTS für 3 h zum Sieden erhitzt.

Das Lösungsmittel wird bis auf 10 ml abgezogen, und das bei 0 °C ausgefallene Produkt abgesaugt.

Ausbeute: 1,50 g (90 %)

$[\alpha]_D$ = 1.8° (C = 0.09 in $CHCl_3$)

(C) S-13-Tetradecen-2-ol (11)

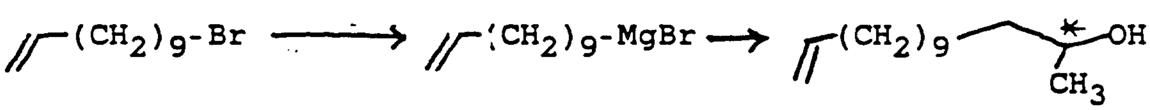

Zu einer Lösung von 5,56 g (2,7 mmol)CuBr $(CH_3)_2$ S in 40 ml $Et_2O$ (abs.) und 25 ml $(CH_3)_2S$ wird bei -45 °C die Grignard-Lösung getropft (aus 6,29 g 11-Undecenylbromid und 720 mg Mg) und 2 h bei dieser Temperatur gerührt. Dann werden bei -78 °C Li-Heptin (aus 2.59 g Heptin und 16,9 ml BuLi (27 mmol)), 4,7 ml HMPI und 30 ml $Et_2O$ absl. zugegeben. Nach 1 h werden 1,56 (27 mmol) S-(-)-Propylenoxid zugefügt und noch 2 h bei -78 °C gerührt, dann 24 h bei -23 °C stehen gelassen.

Anschließend wird mit 50 ml gesättigter $NH_4$-Cl-Lösung hydrolysiert, die Phasen getrennt und die wäßrige Phase noch 2 mal mit Ether extrahiert. Die vereinigten organischen Phasen werden mit gesättigter NaCl-Lösung gewaschen, getrocknet und eingeengt. Reinigung erfolgt durch FSC (mit Ether/Petrolether)-Gemischen steigender Polarität.

Ausbeute: 2,6 g (12.2 mmol) 45 %

(D) 2R-4(4(13-Tetradecen-2-yloxy)benzoyloxy-4-(1-methyl-heptyloxy)-biphenylester (12)

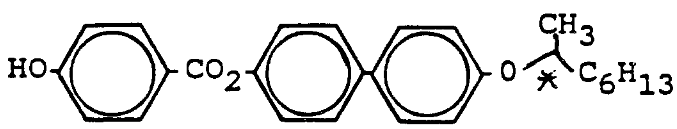

(10)

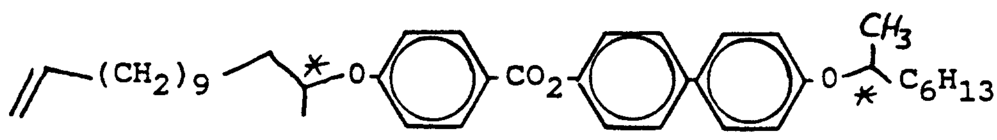

(12)

Wie in der Vorschrift zu 9 angegeben, wurden 1,36 g (3.29 mol) 10, 693 mg (3.25 mmol) 11, 565 mg (3.25 mmol) DEAD und 851 mg (3.25 mmol) Triphenylphosphin in 50 ml abs. THF umgesetzt.

Ausbeute: 910 mg (1.48 mmol) D = 46 %

(E) (R,R)-4-[4-(14-Hydroxytetradecen-2-yloxy)benzoyloxy]-4-(1-methyl-heptyloxy)-biphenylester (13)

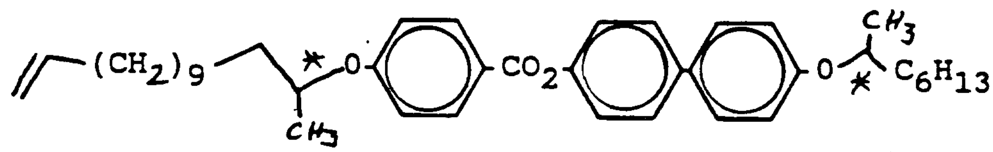

(12)

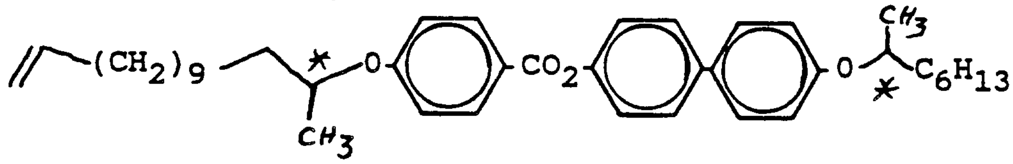

(13)

Zu einem Gemisch von 820 mg (1.33 mmol) (12) und 30 mg (0.8 mmol) $NaBH_4$ in 10 ml THF wurden unter Stickstoffatmosphäre 0.14 ml (0.8 mmol) $(CH_3O)_2SO$ zugegeben. Man rührt für 2 h bei 40 ° C, läßt dann auf 5 ° C abkühlen, gibt 1 ml 1N NaOH und 0.5 ml 30 %ige $H_2O_2$ hinzu und läßt noch 20 min nachrühren. Danach wird 2 mal mit $CH_2Cl_2$ extrahiert, die vereinigten organischen Phasen werden getrocknet ($MgSO_4$) eingeengt und aus Petrolether/Ether umkristallisiert.
Ausbeute: 270 mg (0.43 mmol) = 32 %

(F) (R,R)-4-[4-(13-Aryloxy-tetradecenyl-2-oxy))benzoesäure]-4-(1-methyl-heptyloxy)-biphenylester ($M_1$)

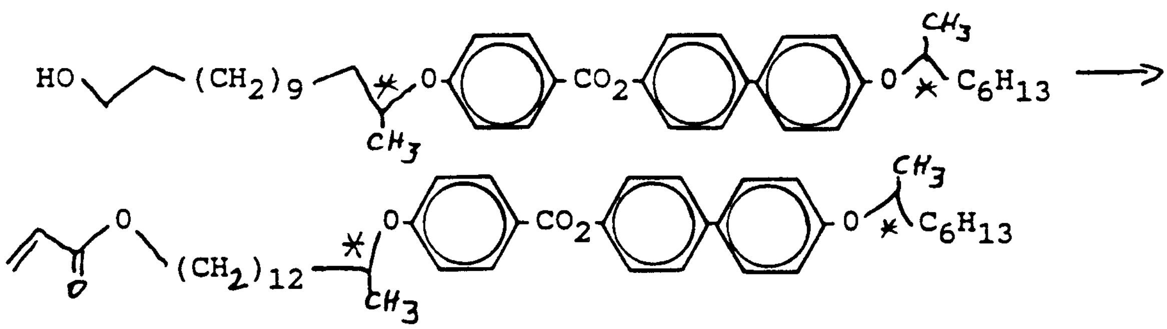

Zu einer Lösung von 270 mg (13) und 0,14 ml (0.1 mmol) TEA in 10 ml abs. THF gibt man bei 20 ° C 0.08 ml (0.1 mmol) Acrylsäurechlorid und läßt 1 h nachrühren.

Dann hydrolysiert man mit $H_20$, extrahiert mit Methylenchlorid wäscht die vereinigten organischen Phasen mit $NH_4Cl$-Lösung, $NaCO_3$-Lösung, gesättigter NaCl-Lösung, trocknet über $MgSO_4$ und engt ein. Reinigung erfolgt durch FSC.
Ausbeute: 210 mg (0.3 mmol) 71 %
$[\alpha]_D$ =

Polymerisation von ($M_1$) zu ($P_1$)

Zu einer Lösung von 200 mg (0.3 mmol) des Monomeren $M_1$ in 2 ml THF werden 3 mg (0.018 mmol) AIBN gegeben und 10 min im trockenen Stickstoffstamm durch die Lösung geleitet. Es wird anschließend bei 60 ° C für 24 h gerührt.

Nach dem Abkühlen wird das Polymer durch Zugabe von 8 ml Methanol ausgefällt und chromatographisch gereinigt.
Ausbeute: 70 mg = 35 %

Bei einer Spannung von 30 Volt werden folgende Schaltzeiten beim ferroelektrischen Schalten in einer 2µm-Zelle bei unterschiedlichen Temperaturen gemessen:

| T [°C] | 44 | 50,7 | 53 |
|---|---|---|---|
| [ms] | 12 | 5 | 4 |

**Beispiel 2**

Darstellung des Monomeren ($M_2$)

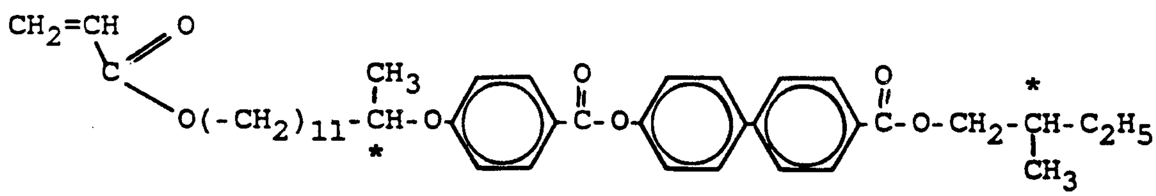

(A) (2S)-(+)-13-Benzyloxy-2-tridecanol (25)

0,38 g Mg Späne (15,7 mmol) werden mit 20 ml Ether überschichtet. Aus 5,38 g (15,7 mmol) Alkylbromid wird 1 g langsam zugegeben. Man erhitzt kurz, sodaß der Ether siedet und gibt nach Reaktionsbeginn das restliche Alkylbromid zu. Nun läßt man die Reaktion rühren, bis sich alle Mg-Späne aufgelöst haben. Anschließend wird eine halbe Stunde bei 40 °C erhitzt. Die Reaktionslösung wird auf -20 °C gekühlt und 0,3 g Cu(I)J (10 mol-%) zugegeben. Es wird 15 Minuten gerührt. Dann werden 1,83 g (31,5 mmol) (S)-(-)-Propylenoxid zugetropft und über Nacht bei Raumtemperatur gerührt. Anschließend wird mit gesättigter $NH_4Cl$-Lösung die Reaktionslösung aufgearbeitet und die wäßrige Phase mit Ether extrahiert. Die organische Phase wird mit $MgSO_4$ getrocknet und eingeengt. Ein Teil der Nebenprodukte wird bei 50 °C und 0,05 Torr abdestilliert und das so gereinigte Rohprodukt nochmals säulenchromatographisch (Petrolether/Ether mit steigender Polarität) gereinigt. Es ergibt sich eine Ausbeute von 0,8 g 24 (17 %) als Farbloses Öl.

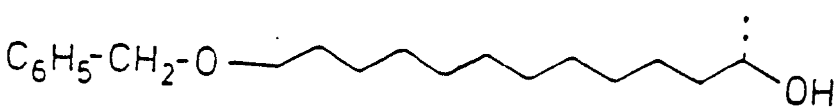

IR ($CHCl_3$) : 3610 ; 3540 - 3240 (OH) ; 2930 ($CH_2$) 1500 ; 1455 ; 1365 ; 1225 ; 1095 ; 940 $cm^{-1}$

(B) (2R",2S)-(+)-4'-(-4"-(12"-Benzyloxy-1"-dodecylmethyloxy)benzoyloxy)biphenyl-4-carbonsäure-2-methylbutylester (27)

Zu einer Lösung von 0,84 g 25 (2,7 mmol) und 1,1 g 13 (2,7 mmol) und 0,7 g Triphenylphosphin (2,7 mmol) in 20 ml abs. THF werden bei 0 °C und Feuchtigkeitsausschluß 0,48 g Azodicarbonsäureester (2,7 mmol) in 5 ml abs. THF innerhalb von 5 min zugetropft. Man läßt 30 min bei 0 °C und 48 Stunden bei Raumtemperatur rühren. Das Lösungsmittel wird abgezogen, der Rückstand mit Ether versetzt und die Lösung wird vom Unlöslichen getrennt. Das Lösungsmittel wird verdampft und anschließend wird säulenchromatographisch gereinigt (Petrolether/Ether mit steigender Polarität). Es ergibt sich eine Ausbeute von 1,16 g 27 (61 %).

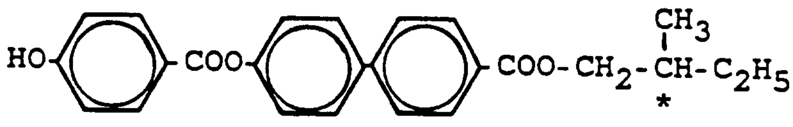

(13)

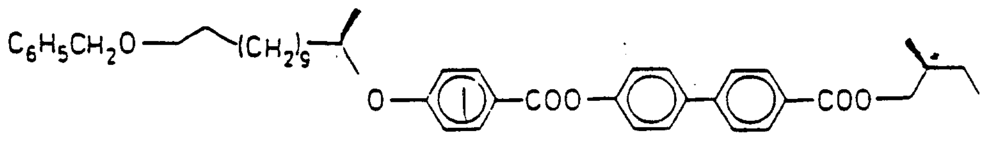

(27)

IR ($CHCl_3$) : 2930 ($CH_2$) ; 2860 ; 1715 (COOR) ; 1610 ; (Ar C = C) ; 1510 ; 1465 ; 1340 - 1190 (R-O-R); 1115 $cm^{-1}$

(C) (2R",2S)-(+)-4'-(-4"-(12"-Hydroxy-1"-dodecylmethyloxy)benzoyloxy-biphenyl-4-carbnsäure-2-methylbutylester (29)

Zu einer Lösung von 1,2 g (2,1 mmol) 27 in 250 ml Ethanol wird 0,16 Pd/C (5 Gew.-%) Katalysator gegeben und bei 50 °C 2 Stunden einer Wasserstoffatmosphäre ausgesetzt. Das Rohprodukt wird über Kieselgel mit Ether/Methylenchlorid (1:1) filtriert. Anschließend wird säulenchromatographisch gereinigt (Petrolether/Ether). Es ergibt sich eine Ausbeute von 0,2 g Produkt (19 %).

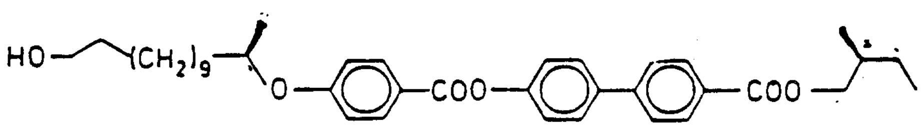

(29)

IR ($CHCl_3$) : 2935 ($CH_2$) ; 2860 ; 1720 (COOR) ; 1610 (Ar C = C) ; 1510 ; 1465 ; 1375 ; 1340 - 1190 ; 1190 ; 1170 ; 1130 ; 1175 ; 1075 ; 1010 $cm^{-1}$

(D) (2R",2S)-(+)-4'-(-4"-(12"-Acryloyloxy-1"-dodecylmethyloxy)benzoyloxy)-4-biphenylcarbonsäure-2-methylbutylester ($M_2$)

29 (0,2 g, 0,32 mmol) wird in 10 ml THF vorgelegt und mit Triethylamin (67 mg, 0,66 mmol) versetzt. Man kühlt auf -78 °C ab und gibt unter Lichtabschluß (33 mg, 0,36 mmol) Acrylsäurechlorid zu und verfolgt den Reaktionsverlauf durch Dünnschichtchromatographie. Der Ansatz wird nach vollständiger Umsetzung direkt säulenchromatographisch (Methylenchlorid/Methanol mit steigender Polarität) gereinigt. Es ergibt sich eine Ausbeute von 84 mg Monomer 32 (38 %) als farbloses Öl.

IR ($CHCl_3$) : 2940 ($CH_2$) ; 2860 ; 1715 (COOR) ; 1610 (Ar C = C) ; 1510 ; 1465 ; 1235 - 1180 (R-O-R) $cm^{-1}$

Polymerisation vom ($M_2$) zu ($P_2$)

264 mg ($M_2$ werden in abs. THF gelöst und mit 1 mg AIBN versetzt. Es wird 30 Minuten mit Stickstoff gespült und 8 h bei 60 °C polymerisiert. Die Reinigung erfolgt chromatographisch.
Ausbeute 80 mg = 30 %
Das flüssigkristalline Polymer besitzt eine mittlere Molmasse Mw = 21 500.
$E = Mw/M_N = 1{,}82$

**Beispiel 3**

Darstellung des Monomeren ($M_3$)

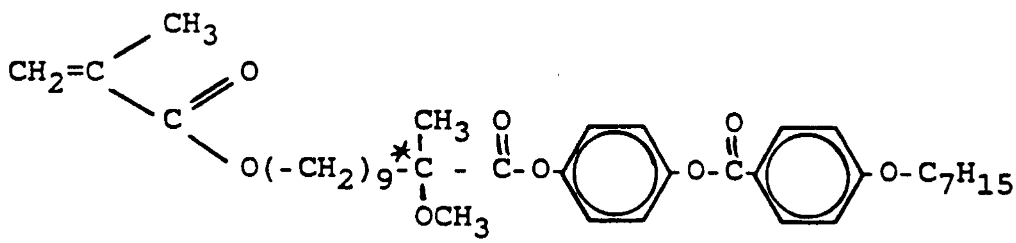

Die Synthese erfolgt gemäß folgendem Schema:

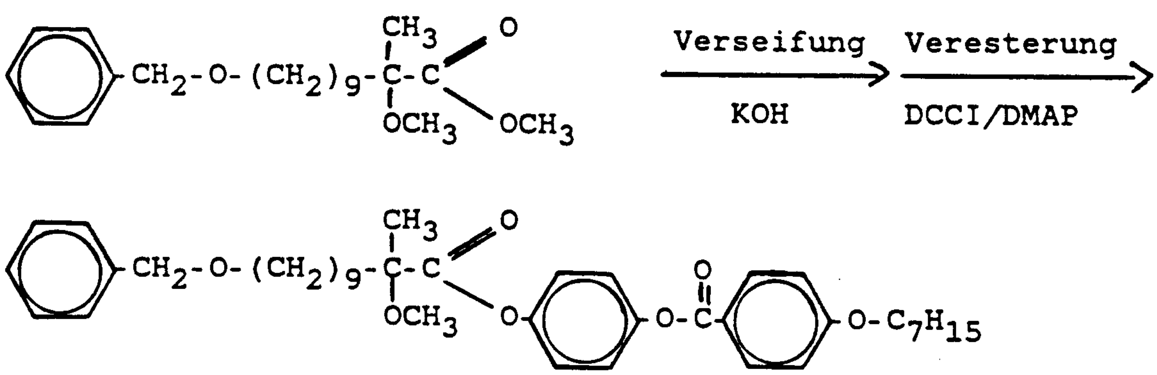

Spektroskopische Daten vom ($M_3$)

| | | | |
|---|---|---|---|
| 400 MHz-NMR ($COCl_3$) | H1 | 0,90 | t (3) J = 7,0 |
| | H2,3,4 15,16,17 18,19,20 | 1,25-1,51 | m (18) |
| | H5 | 1,47 | q (2) J = 7,0 |
| | H6 | 1,82 | q (2) J = 7,0 |
| | H7 | 4,04 | t (2) J = 7,0 |
| | H8 | 6,97 | d (2) J = 9,0 |
| | H9 | 8,13 | d (2) J = 9,0 |
| | H10 | 7,23 | d (2) J = 9,0 |
| | H11 | 7,13 | d (2) J = 9,0 |
| | H12 | 1,54 | s (3) |
| | H13 | 3,39 | s (3) |
| | H14 | 1,86-1,91 | m (2) |
| | H21 | 1,66 | q (2) J = 7,0 |
| | H22 | 4,13 | t (2) J = 7,0 |
| | H23 | 1,94 | dd (3) J = 1,6/1,0 |
| | H24 | 6,09 | dt (1) J = 1,5/1,0 |
| | H25 | 5,54 | dt (1) J = 1,6/1,5 |

IR : $2970\ cm^{-1}$: C-H-Valenzschwingungen
$2890\ cm^{-1}$
$1770\ cm^{-1}$: C = O-Valenzschwingung (Ester einer aliphat. Säure)
$1745\ cm^{-1}$: C = O-Valenzschwingung (Ester einer olefin. Säure)
$1730\ cm^{-1}$: C = O-Valenzschwingung (Ester einer aromat. Säure)
$1625\ cm^{-1}$: C = C-Valenzschwingungen

Polymerisation von ($M_3$) zu ($P_3$)

0,62 g (+)-(2S)-4-(2-Methoxy-2-methyl-11-(2'-methyl-propenoyloxy)-undecoyloxy)-phenyl-4-heptoxybenzoat wird in 5 ml THF gelöst und unter trockener Stickstoffatmosphäre mit 1,7 mg AIBN versetzt. Die Lösung wird 7 h bei 60 °C gerührt. Das entstandene Polymer wird nun in -20 °C kaltem Methanol ausgefällt. Ausbeute: 0,45 g = 72 %

| | | | |
|---|---|---|---|
| 90MHz-NMR ($CDCl_3$) | H1 | 0,6-0,7 | m (3) |
| | H2,4,5,6 7,8,9,10 11,19,20, 21,22,23 | 0,8-2,1 | m (28) |
| | H3,18 | 3,9-4,2 | m (4) |
| | H12 | 1,57 | sbr (3) |
| | H13 | 3,42 | sbr (3) |
| | H14,15 | 7,2-7,3 | m (4) |
| | H16 | 8,18 | dbr (2) J = 9 |
| | H17 | 7,00 | dbr (2) J = 9 |
| | H24 | 0,8-1,1 | m (3) |

Das Polymer ($P_3$) hat eine mittlere Molmasse von 76 000 g/mol und zeigt folgende Phasenfolge:
Tg -6 $S_A$ 40 I  E = $Mw/M_N$ = 2,12

**Beispiel 4**

Darstellung des Monomeren ($M_4$)

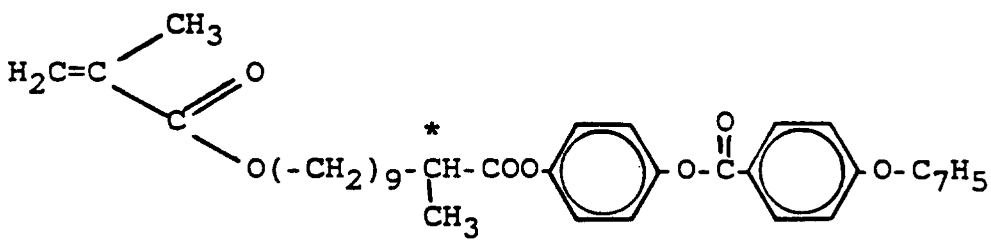

Die Synthese erfolgt gemäß folgendem Schema:

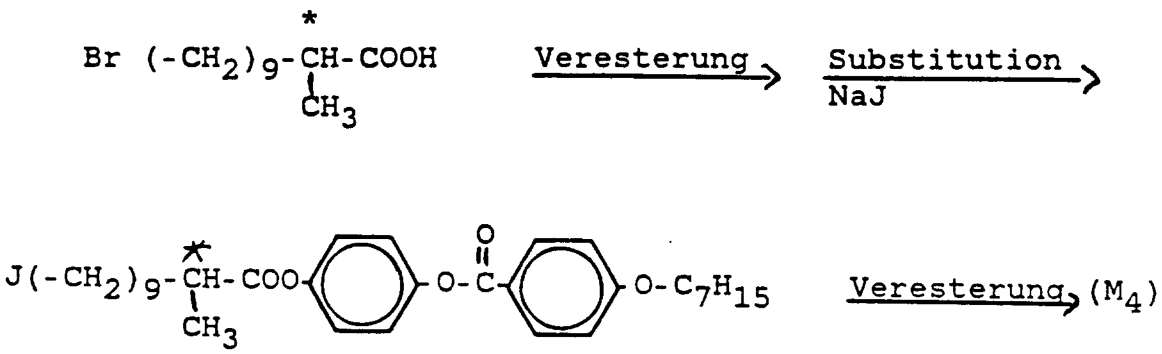


Polymerisation von ($M_4$) zu ($P_4$)

0,6 g des Monomer ($M_4$) werden in 5 ml abs. THF gelöst, mit 1,7 mg AIBN versetzt und 3 h bei 60 °C gerührt. Das Polymer wird abgetrennt und chromatographisch gereinigt.
Es hat eine mittlere Molmasse von Mw = 125 000 g/Mol und weist folgende Phasenfolge auf:
Tg -12 $S_A$ 42 I  E = Mw/$M_N$ = 4,31

**Beispiel 5**

**A) Allgemeine Vorschriften**

I Allgemeine Vorschrift zur Veresterung mittels Dicyclohexylcarbodiimid

Zu 1 mmol des entsprechenden Alkohols in 10 ml abs. $CH_2Cl_2$ werden unter Rühren und Feuchtigkeitsausschluß 15 Mol-% 4-Dimethylaminopyridin (DMAP) und 1 mmol der Carbonsäure gegeben. Man kühlt auf 0 °C und setzt 1 mmol Dicyclohexyl-carbdiimid (DCC) zu. Anschließend rührt man 30 min bei 0 °C und 18 h bei Raumtemperatur.
Die ausgefallene Substanz wird abfiltriert, die $CH_2Cl_2$-Phase mit Wasser gewaschen, über $MgSO_4$ getrocknet und das Lösungsmittel abgezogen.

II Allgemeine Vorschrift zur Spaltung von Tetrahydropyranylethern (THP-Ether)

Eine Lösung von 5 mmol THP-ether und 0.5 mmol PPTS (Pyridinium-p-Toluolsulfonat) in 40 ml Ethanol wird bei 55 °C (Ölbadtemperatur) 3 h gerührt. Das Lösungsmittel wird abgezogen und der Rückstand mit $H_2O$ gewaschen.

III Allgemeine Vorschrift zur Darstellung von Polyacrylaten durch radikalische Polymerisation

0.5 g Monomer löst man in 5 g Toluol, das zuvor über Lithiumaluminiumhydrid destilliert wurde, und versetzt mit 1 Mol% AIBN (Azodiisobutyronitril), das vorher aus Ether umkristallisiert und in Toluol gelöst wurde. Anschließend wird für 5 min über $P_2O_5$ getrockneter Stickstoff durch die Lösung geleitet, die Reaktionsgefäße geschlossen und für 48 h auf 70 °C gehalten. Die Polymere werden durch Gelpermeationschromatographie oder durch Umfällen gereinigt.

**B) Herstellung des Monomeren $M_5$**

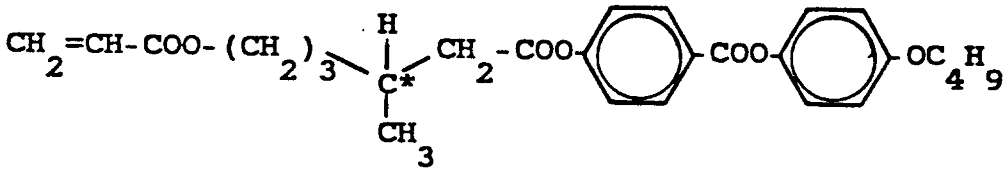

**4-Butoxyphenyl-4-tetrahydropyran-2-yl-oxy-benzoat (3)**

Nach der allgemeinen Vorschrift (I) werden 7 g (32 mmol) (2) mit 5.23 g (38 mmol) 4-Butoxyphenol 0.7 g DMAP und 6.5 g (38 mmol) DCC versetzt.
Das Rohprodukt wird säulenchromatographisch (Laufmittel $CH_2Cl_2$) gereinigt. Man isoliert ein farbloses Öl.
Ausbeute: 8.36 g (72 %)

**4-Butoxyphenyl-4-hydroxybenzoat (4)**

Gemäß der allgemeinen Vorschrift II werden 8.36 g (23 mmol) (3) in 180 ml Ethanol gelöst, mit 573 mg (2.3 mmol) PPTS versetzt und 6 h bei 55 °C (Ölbadtemperatur) gerührt.
Ethanal wird abdestilliert, der Rückstand mit Ether versetzt, mit $H_2O$ gewaschen, über $MgSO_4$ getrocknet und das Lösungsmittel abgezogen.
Ausbeute: 6.08 g (93 %)
Schmp.: 153 °C

**(R)-(+)-6-Hydroxy-3-methylhexansäuremethylester (10)**

9.42 g (51 mmol) (R)-(+)-Methylcitronellat (9) wird in 26 ml Methanol gelöst und mit 2.45 g (51 mmol) $O_3$ 1 h bei -30 °C gesättigt. Anschließend werden 3.12 g (82 mmol) $NaBH^4$ in kleinen Portionen unter Rühren addiert. Während der stark exothermen Reaktion, die 2 h dauert, hält man die Temperatur zwischen -20 °C und +10 °C. Anschließend entfernt man die Kühlung und läßt auf Raumtemperatur erwärmen. Ein großer Teil des Methanols wird abdestilliert und der Rückstand mit 80 ml $CHCl_3$ versetzt. Diese Mischung wird bei 0 °C zu einer schnell gerührten Lösung von 50 ml konz. HCl in 100 g Eis gegeben. Die Chloroformphase wird einmal mit $Na_2CO_3$-Lösung und dreimal mit $H_2O$ gewaschen, einmal mit $Na_2CO_3$-Losung und dreimal mit $H_2O$ gewaschen, über $MgSO_4$ getrocknet und eingeengt. Das Rohprodukt wird am Kugelrohr destilliert.
Ausbeute: 5.12 g (68 %)
$[\alpha]_D^{20}$ = + 9.3 ° (c = 1 in Chloroform)
Sdp.: 85 °C

**(3R)-6-Tetrahydropyran-2-yl-oxy-3-methylhexansäuremethyl-ester (11)**

Nach der allgemeinen Vorschrift II werden 3 g (19 mmol) (10) mit 2.15 g (27.5 mmol) DHP und 152 mg eines sauren Ionenaustauschers bei 0 °C 2 h gerührt.
Das Rohprodukt wird am Kugelrohr destilliert.
Ausbeute: 4.64 g (100 %)

**(3R)-6-Tetrahydropyran-2-yl-oxy-3-methylhexansäure (5)**

Nach der allgemeinen Vorschrift (I) werden 2.5 g (10 mmol) (11) mit 1.15 g (20 mmol) KOH in 20 ml Ethanol 3 h bei 80 °C gerührt.
Die klare Reaktionsmischung wird im Vakuum vom Ethanol befreit, mit Eiswasser versetzt sowie mit Ether überschichtet. Zu dieser Mischung tropft man bei 0 °C unter starkem Rühren 20 ml 1n HCl. Die organische Phase wird abgetrennt, mit $H_2O$ gewaschen, über $MgSO_4$ getrocknet und eingeengt. Der zähflüssige Rückstand wird ohne weitere Reinigung umgesetzt.

**(3R)-4-(6-Tetrahydropyran-2-yl-oxy)-3-methylhexanoyloxy-4-butoxyphenyl-benzoat (6)**

Nach der allgemeinen Vorschrift (I) werden 2.6 g (9.1 mmol) (4) mit 2.09 g (9.1 mmol) (5), 167 mg DMAP und 1.87 g (9.1 mmol) DCC umgesetzt.
Die Reinigung erfolgt säulenchromatographisch (Laufmittel E/PE) 1:1). Man isoliert eine farblose ölige Flüssigkeit. Ausbeute: 3.01 g (67 %)

**(3R)-4-(6-Hydroxy-3-methylhexanoyl)-oxy-4-butoxyphenyl-benzoat (7)**

Entsprechend der allgemeinen Vorschrift II werden 3 g (6 mmol) (6) in 50 ml Ethanol gelöst, mit 0.15 g (0.6 mmol) PPTS versetzt und 3 h bei 55 °C (Ölbadtemperatur) gerührt. Die Reaktionsmischung wird eingeengt, mit Ether versetzt, dreimal mit $H_2O$ gewaschen, über $MgSO_4$ getrocknet und eingeengt.
Ausbeute: 2.01 g (81 %)
$[\alpha]_D^{20}$ = -
Schmp.: 55 °C

**(3R)-4-(6-Acryloyloxy-3-methylhexanoyl)-oxy-4-butoxyphenyl-benzoat (8)**

Gemäß der allgemeinen Vorschrift (I) werden 1.99 g (4.8 mmol) (7) mit 404 mg (4.8 mmol) Acrylsäure, 88 mg DMAP und 0.99 g DCC versetzt.
Die Reinigung erfolgt säulenchromatographisch (Laufmittel $CH_2Cl_2$). Es wird eine rötliche zähe Flüssigkeit isoliert.
Ausbeute: 1.1 g (49 %)
$[\alpha]_D^{20}$ = + 6.8° (c = 1.12 in Chloroform)

Polymerisation zu ($P_5$)

**Poly-(1-(4-butoxyphenoxycarbonyl)-phenoxycarbonyl-(3R)-3-methylpentanoxycarbonyl)-ethylen)**

Nach der allgemeinen Vorschrift (III) werden 0.55 g (1.18 mmol) (8) in 5 ml abs. Toluol gelöst und mit 2 mg Azoisobutyronitril versetzt.
Die Reaktionsmischung wird 48 h auf 60 °C gehalten.
Die erkaltete Lösung wird in 50 ml Methanol gegossen, das ausgefallene Polymer abgenutscht und mit Methanol gewaschen.
Ausbeute: 12 mg (2.2 %)
$[\alpha]_D^{20}$ = + 7.4° (c = 0.72 in Chloroform)
Das flüssigkristalline Polymer hat eine mittlere Molmasse Mw > $10^6$.
Wird die Polymerisation in THF bei 62 °C (7 h) vorgenommen, so entsteht ein Polymer der mittleren Molmasse Mw = 22 000, das folgende Phasenfolge aufweist.
Tg 38 $S_c$* 97 $S_A$ 103 I

**Beispiel 6**

Darstellung des Monomer ($M_6$)

Nach der Methode von Meyers et al in J.A.C.S. 98, S.567 (1976) wurde aus (1S,2S) (+)-1-phenyl-2-amino-1,3-propandiol und dem Orthoester der Formel

$CH_3CH_2C(OC_2H_5)_3$

die Oxazolin-Verbindung der Formel

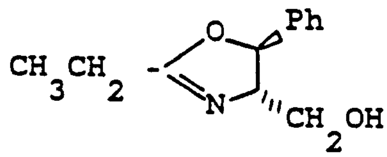

hergestellt und anschließend mit Natriumhydrid/Methyljodid in die entsprechende Methoxyverbindung der Formel

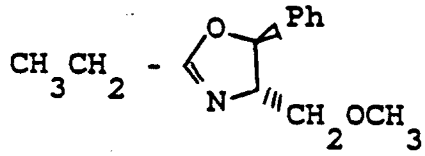

umgewandelt. Diese Verbindung wurde mit LDA metalliert und anschließend wurde bei -98 °C die Verbindung der Formel

$CH_3OC_4H_8J$

addiert. Man erhielt in einer Ausbeute von 25 % die Verbindung der Formel

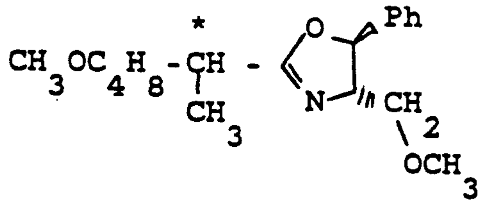

2,13 g dieser Verbindung wurden mit 4 N $H_2SO_4$ 3,5 h unter Rückfluß erhitzt. Nach Aufarbeitung erhielt man 1,16 g der Verbindung der Formel

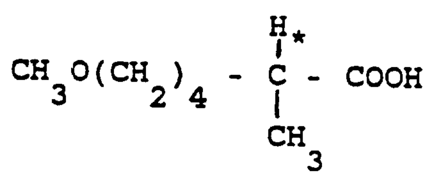

$[\alpha]_D^{20}$ : + 6,4 ° (c = 1,06 in $CHCl_3$)
1,08 g dieses Methylethers wurden in abs. $CH_2Cl_2$ gelöst, auf 0 °C abgekühlt und langsam mit einer Lösung von 6,75 mmol $BBr_3$ in $CH_2Cl_2$ versetzt. Die Reaktionsmischung wurde über Nacht bei Raumtemperatur gerührt. Anschließend wurde durch Zugabe von Wasser hydrolysiert, die organische Phase mit $MgSO_4$ getrocknet, eingeengt und der Rückstand im Vakuum destilliert.
Ausbeute: 870 mg (62 %) der Verbindung der Formel

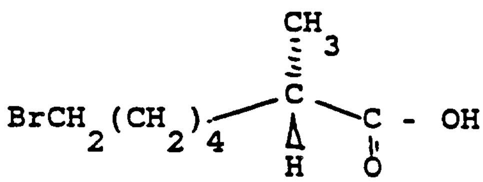

$[\alpha]_D^{20}$ : + 3,4°, c = 1,07 in $CHCl_3$
Diese Säure wurde mit einer Verbindung der Formel

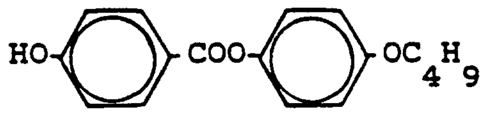

in $CH_2Cl_2$ und in Gegenwart von Dicyclohexylcarbodiimid verestert.

In einer Ausbeute von 83 % erhielt man die Verbindung der Formel

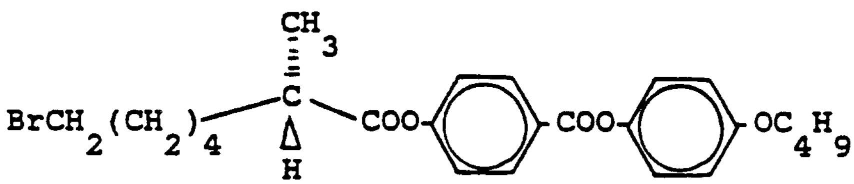

$[\alpha]_D^{20}$ : + 6°; c = 1,5 in $CHCl_3$
1,5 g dieser Verbindung wurden mit 3,51 mg Lithium-acrylat in HMPA bei 40°C unter Rühren während 48 h umgesetzt. Man erhielt in einer Ausbeute von 52 % die Verbindung der Formel

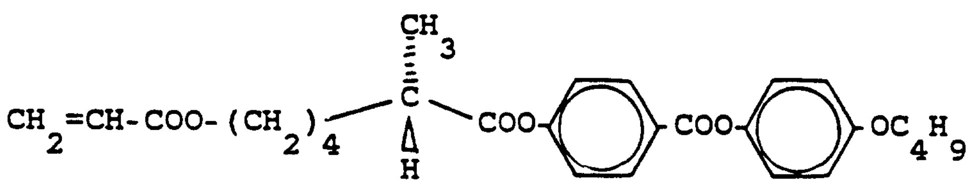

Polymerisation zu ($P_6$)

Die Polymerisation dieser Verbindung erfolgte durch Erhitzen von 720 mg des Monomers $M_6$ in Tetrahydrofuran auf 60°C für 24 Stunden in Gegenwart von Azoisobutyronitril als Initiator.

Das flüssigkristalline Polymer besitzt eine mittlere Molmasse Mw = 9 600 g/Mol. E = $Mw/M_N$ = 1,73
Das Polymer besitzt im Temperaturbereich von 10 - 40°C eine smektische Phase.

**Beispiel 7**

Das Monomer ($M_7$) wird analog zu ($M_1$) synthetisiert.

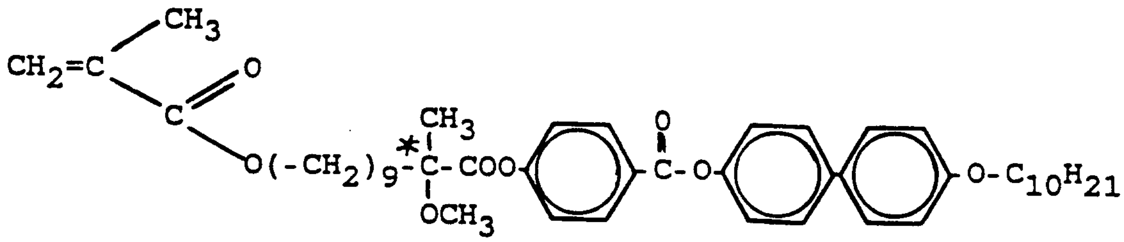

Die Polymerisation erfolgt ebenfalls analog zu Beispiel 1.
Das Polymer ($P_7$) besitzt eine mittlere Molmasse
Mw = 400 000.  E = $Mw/M_N$ = 1,68.

**Patentansprüche**

1. Ferroelektrische, flüssigkristalline Polymere enthaltend wiederkehrende Einheiten der Formel (I)

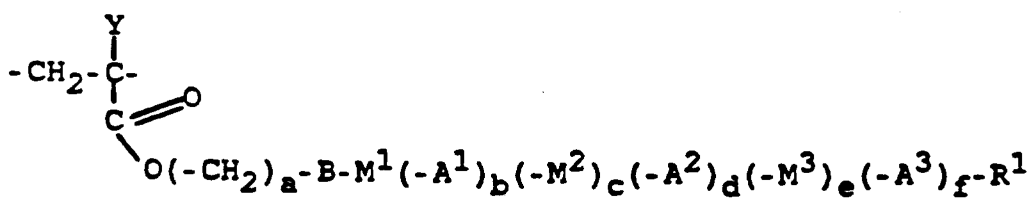

wobei
B = eine mindestens einfach chirale Gruppe der Formel

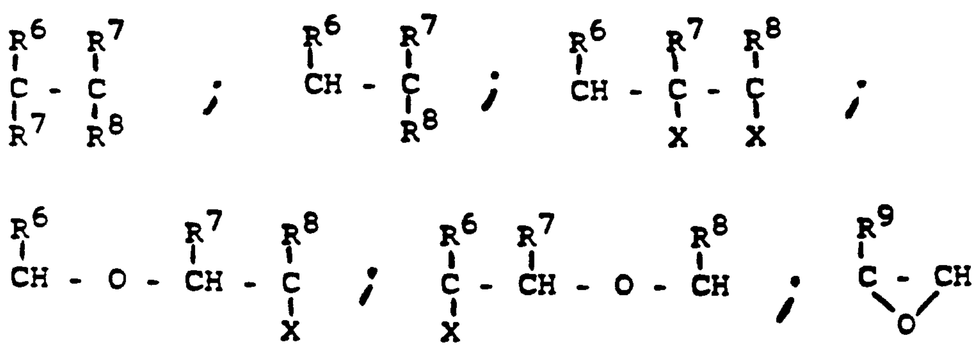

mit $R^6$, $R^7$, $R^8$ gleich oder verschieden H, $CH_3$, $OCH_3$, F, Cl, Br, wobei mindestens eine Gruppe $R^6$, $R^7$, $R^8$ gleich H sein muß und X = H, F, Cl, Br und $R^9$ = H, $C_1$-$C_{10}$-Alkyl,

Y = H, $CH_3$, F,

$R^1$ = geradkettiges oder verzweigtes (mit oder ohne asymmetrisches C-Atom) Alkyl oder Alkenyl mit 1 bis 16 C-Atomen, wobei auch eine oder zwei nichtbenachbarte $-CH_2$-Gruppen durch -O-, -S-, -CO-, -CO-O-, -O-CO- oder -O-CO-O- ersetzt sein können und wobei auch H durch F ersetzt sein kann, oder einer der nachfolgenden Reste

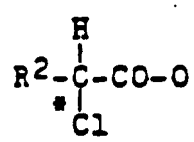 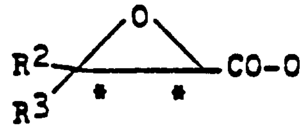 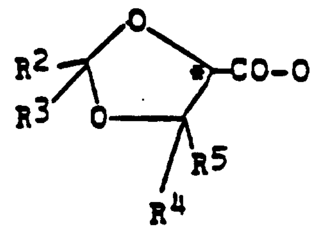

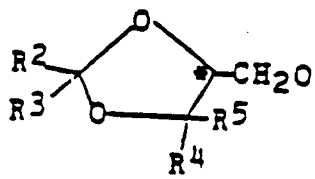 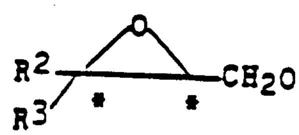 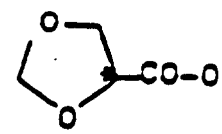

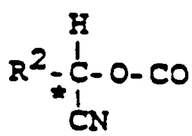 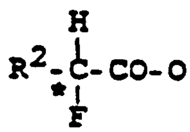 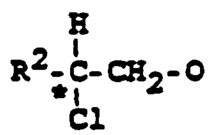

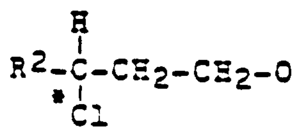 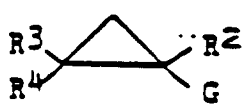

| | |
|---|---|
| $R^2$, $R^3$, $R^4$, $R^5$ = | H oder geradkettiges oder verzweigtes Alkyl mit 1 bis 16 oder Alkenyl mit 2 bis 16 C-Atomen, bei dem auch eine $-CH_2$-Gruppe durch - O-, -CO-O- oder -O-CO- ersetzt sein kann, oder $R^2$ und $R^3$ bzw. $R^4$ und $R^5$ zusammen cyclisches Alkyl mit 3 bis 8 C-Atomen |
| a = | 2 bis 20, vorzugsweise 6 bis 12 b, c, d, e, f = 0 oder 1 mit der Maßgabe, das d+e+f = 2 oder 3 ist |
| $A^1$, $A^2$, $A^3$ = | gleich oder verschieden 1,4-Phenylen, bei dem 1 oder 2 H durch F, Cl und/oder CN ersetzt sein können, trans-1,4-Cyclohexylen, bei dem 1 oder 2 H durch F, Cl, CN und/oder $CH_3$ ersetzt sein können, Pyrazin-2,5-diyl, Pyridazin-3,6-diyl, Pyridin-2,5-diyl, Pyrimidin-2,5-diyl, (1,3,4)-Thiadiazol-2,5-diyl, 1,3-Dioxan-2,5-diyl, 1,3-Dithian-2,5-diyl. |
| $M^2$, $M^3$ = | gleich oder verschieden CO-O, O-CO, CO-S, S-CO, $CH_2$-O, O-$CH_2$, |
| $M_1$ = | O, 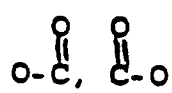 |
| G = | geradkettiges oder verzweigtes Alkylen mit 1 bis 16 C-Atomen oder Alkenylen mit 2 bis 16 C-Atomen, bei dem auch eine oder zwei nichtbenachbarte $-CH_2$-Gruppen durch -O-, -S-, -O-CO-, -CO-O-, S-CO- oder -CO-S- ersetzt sein können, bedeuten. |

2. Ferroelektrische, flüssigkristalline Polymere bestehend aus wiederkehrenden Einheiten der Formel (I) aus Anspruch 1, dadurch gekennzeichnet, daß die Gruppierung $(-A^1)_b(M^2)_c(-A^3)_d(-M^3)_e(-A^3)_f-$ bedeutet:

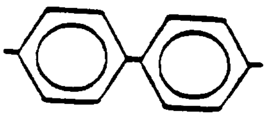
,
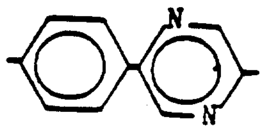
,
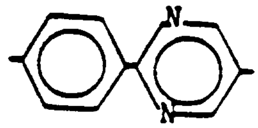
,
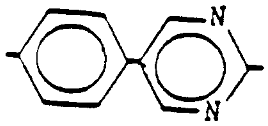
,
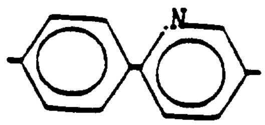
,
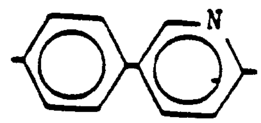
,
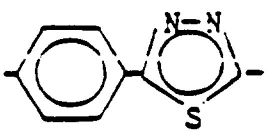
,
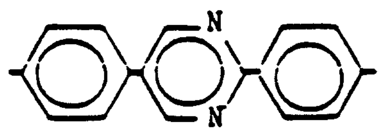
,
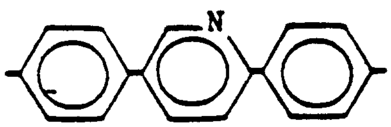
,
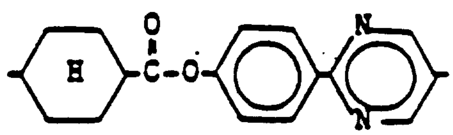
,
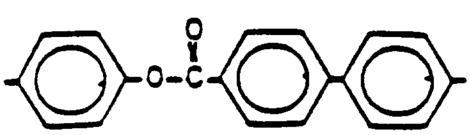
,
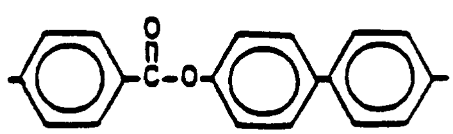
,

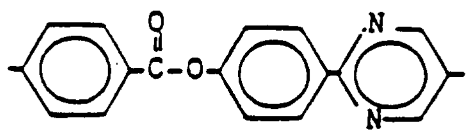 , 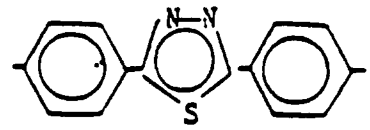 ,

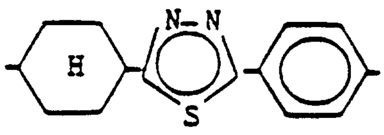 , 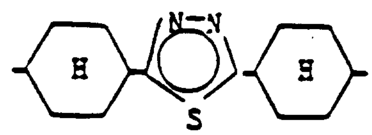 ,

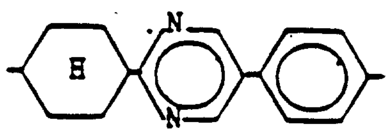 , 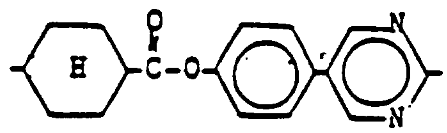 .

3. Ferroelektrische, flüssigkristalline Polymere bestehend aus wiederkehrenden Einheiten der Formel (I) nach Anspruch 1 wobei

B = die in Anspruch 1 genannte Bedeutung hat und

Y = H, $CH_3$,

$R^1$ = geradkettiges oder verzweigtes (mit oder ohne asymmetrisches C-Atom) Alkyl oder Alkenyl mit 2 bis 16 C-Atomen, wobei auch eine oder zwei nichtbenachbarte $-CH_2$-Gruppen durch -O-, -S-, -CO-, -CO-O-, -O-CO- oder -O-CO-O- ersetzt sein können und wobei auch H durch F ersetzt sein kann, oder den Rest

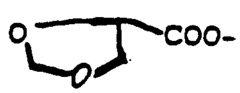

a = 2 bis 20, vorzugsweise 6 bis 12, bedeuten und die Gruppierung $(-A^1)_b(-M^2)_c-(-A^2)_d(-M^3)_e(-A^3)_f-$ folgende Strukturen umfaßt:

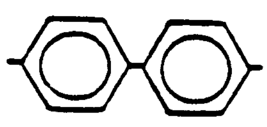 , 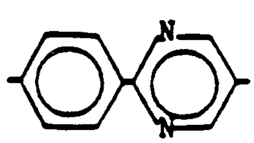 , 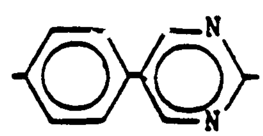 ,

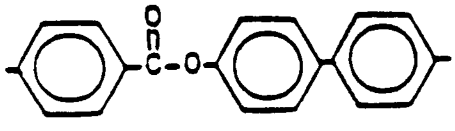 , 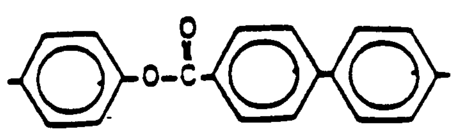 ,

4. Ferroelektrische, flüssigkristalline Copolymere bestehend aus mindestens zwei verschiedenen Einheiten der Formel (I) nach Anspruch 1.

5. Verfahren zur Herstellung der Polymeren nach einem der Ansprüche 1 bis 4, dadurch gekennzeichnet, daß man Verbindungen der Formel (II)

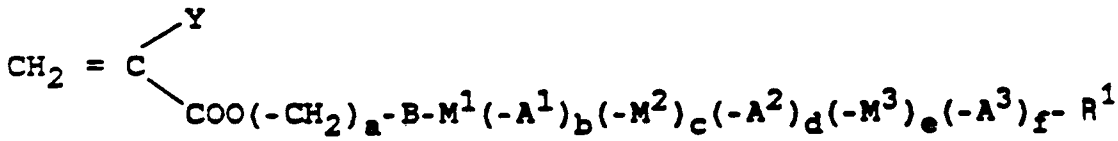

mittels eines Radikalbildners polymerisiert, wobei
Y, $M^1$, $M^2$, $M^3$, $A^1$, $A^2$, $A^3$, $R^1$, B, a, b, c, d, e, f
die jeweils in den Ansprüchen 1 bis 3 angegebenen Bedeutungen haben.

6. Verwendung von ferroelektrischen, flüssigkristallinen Polymeren nach einem der Ansprüche 1 bis 4 in elektrooptischen Bauteilen.

7. Elektrooptische Bauteile enthaltend ein Polymer nach einem der Ansprüche 1 bis 4

## Claims

1. A ferroelectric, liquid-crystalline polymer containing repeating units of the formula (I)

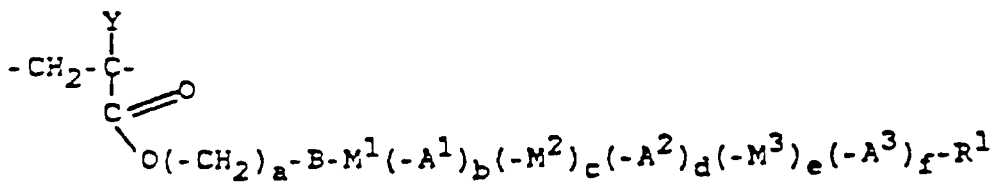

in which

B = a group having at least one chiral center of the formula

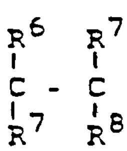 ; 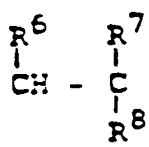 ; 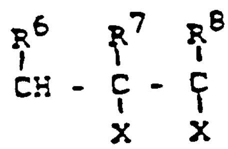 ;

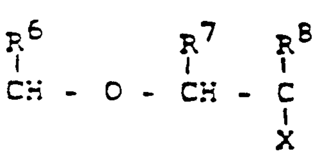 ; 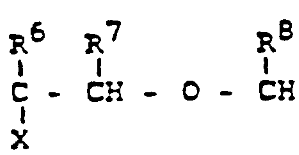 ; 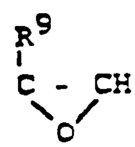

where $R^6$, $R^7$ and $R^8$ are identical or different and are H, $CH_3$, $OCH_3$, F, Cl or Br, and at least one of the groups $R^6$, $R^7$ and $R^8$ must be H and X = H, F, Cl or Br and $R^9$ = H or $C_1$-$C_{10}$-alkyl,

Y = H, $CH_3$ or F,

$R^1$ = straight-chain or branched (with or without an asymmetric carbon atom) alkyl or alkenyl having 1 to 16 carbon atoms, in which one or two non-adjacent $-CH_2-$ groups may also be replaced by - O-, -S-, -CO-, -CO-O-, -O-CO- or -O-CO-O- and in which H may also be replaced by F,

or $R^1$ is one of the following radicals

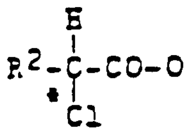
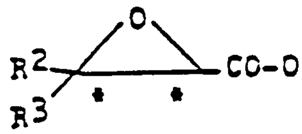
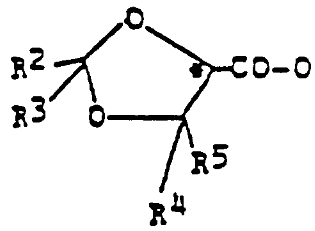

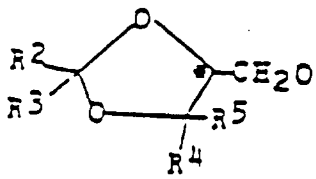
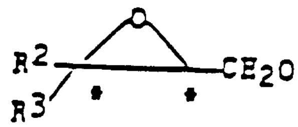
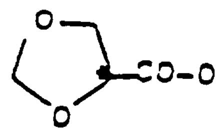

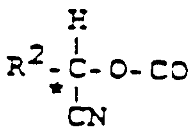
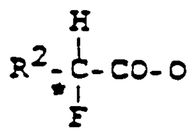
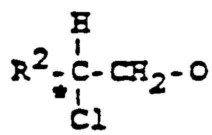

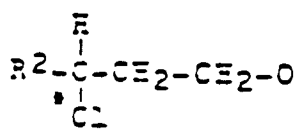
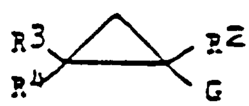

$R^2$, $R^3$, $R^4$ and $R^5$ = H or straight-chain or branched alkyl having 1 to 16, or alkenyl having 2 to 16, carbon atoms, in which one $-CH_2-$ group may also be replaced by -O-, -CO-O- or -O-CO-, or $R^2$ and $R^3$, or $R^4$ and $R^5$, may jointly form a cyclic alkyl having 3 to 8 carbon atoms

a = 2 to 20, preferably 6 to 12

b, c, d, e and f = 0 or 1 with the proviso that d + e + f = 2 or 3

$A^1$, $A^2$ and $A^3$ = identical or different 1,4-phenylene in which 1 or 2 hydrogen atoms may be replaced by F, Cl and/or CN, trans-1,4-cyclohexylene in which 1 or 2 hydrogen atoms may be replaced by F, Cl, CN and/or $CH_3$, 2,5-pyrazinediyl, 3,6-pyridazinediyl, 2,5-pyridinediyl, 2,5-pyrimidinediyl, (1,3,4)-thiadiazole-2,5-diyl, 1,3-dioxan-2,5-diyl or 1,3-dithian-2,5-diyl.

$M^2$ and $M^3$ = identical or different CO-O, O-CO, CO-S, S-CO, $CH_2$-O or O-$CH_2$

$M^1$ = O,

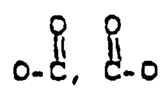

G = straight-chain or branched alkylene having 1 to 16 carbon atoms, or alkenylene having 2 to 16 carbon atoms, in which one or two non-adjacent $-CH_2-$ groups may also be replaced by -O-, -S-, -O-CO-, -CO-O-, S-CO- or -CO-S-.

2. A ferroelectric, liquid-crystalline polymer composed of repeating units of the formula (I) as claimed in claim 1, wherein the group $(-A^1)_b(M^2)_c(-A^3)_d(-M^3)_e(-A^3)_f-$ is:

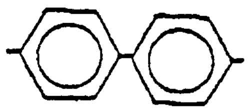 , 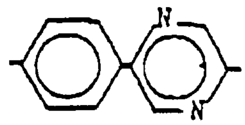 , 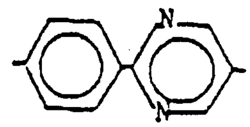 ,

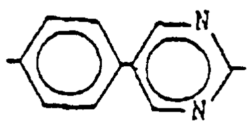 , 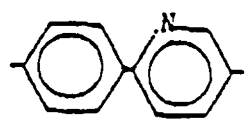 , 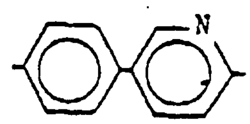 ,

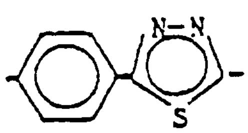 , 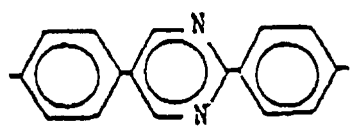 ,

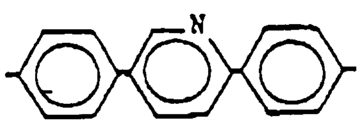 , 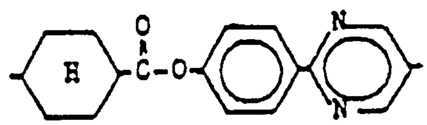 ,

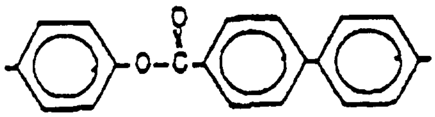 , 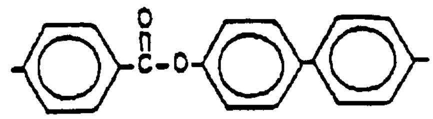 ,

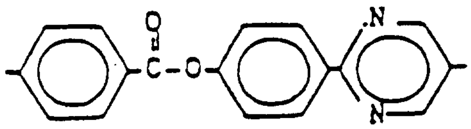 , 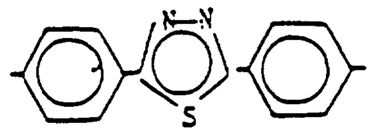 ,

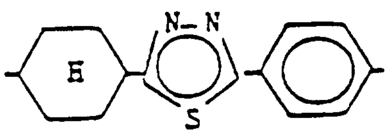 , 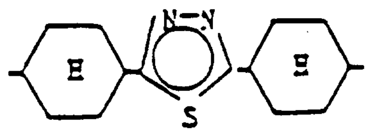

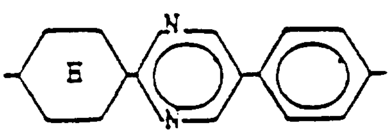 , 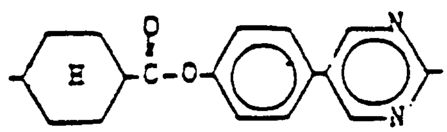

3. A ferroelectric, liquid-crystalline polymer composed of repeating units of the formula (I) as claimed in claim 1, wherein

B has the meaning given in claim 1 and

Y = H or $CH_3$,

$R^1$ = straight-chain or branched (with or without an asymmetric carbon atom) alkyl or alkenyl having 2 to 16 carbon atoms, in which one or two non-adjacent $-CH_2-$ groups may also be replaced by - O-, -S-, -CO-, -CO-O-, -O-CO- or -O-CO-O- and in which H may be replaced by F, or is the radical

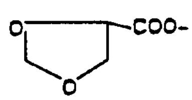 ,

a = 2 to 20, preferably 6 to 12, and the group $(-A^1)_b(-M^2)_c-(-A^2)_d(-M^3)_e(-A^3)_f-$ includes the following structures:

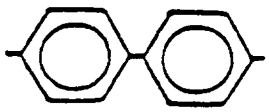 , 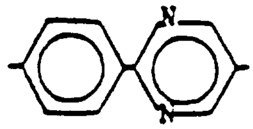 , 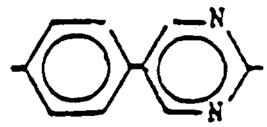 ,

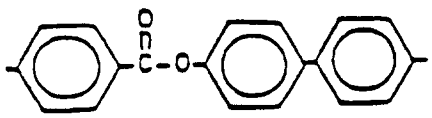 , 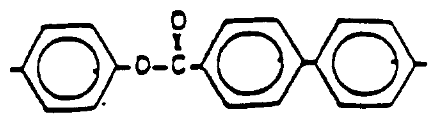 ,

4. A ferroelectric, liquid-crystalline copolymer composed of at least two different units of the formula (I) as claimed in claim 1.

5. A process for the preparation of the polymer as claimed in one of claims 1 to 4, which comprises polymerizing compounds of the formula (II)

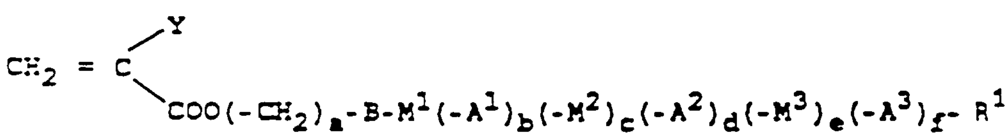

using a free-radical former,
and
Y, $M^1$, $M^2$, $M^3$, $A^1$, $A^2$, $A^3$, $R^1$, B, a, b, c, d, e, and f
each have the meaning given in claims 1 to 3.

6. The use of a ferroelectric, liquid-crystalline polymer as claimed in one of claims 1 to 4 in electrooptical components.

7. An electrooptical component containing a polymer as claimed in one of claims 1 to 4.

## Revendications

1. Polymères en cristaux liquides ferroélectriques comportant des motifs récurrents de formule (I) ci-dessous

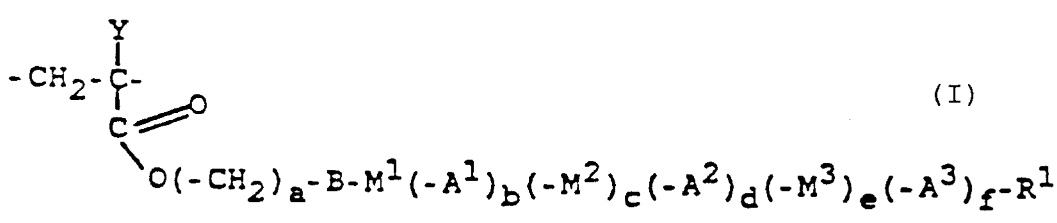

(I)

dans laquelle
B représente un groupe au moins mono-chiral, de l'une des formules

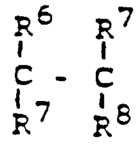 ; 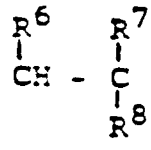 ; 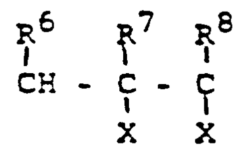 ;

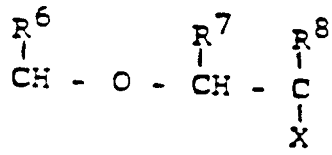 ; 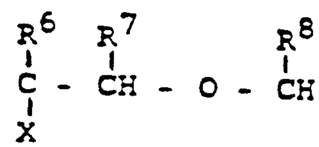 ; 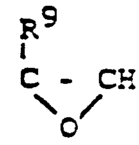

$R^6$, $R^7$ et $R^8$, qui peuvent être identiques ou différents les uns des autres, désignant H, $CH_3$, $OCH_3$, F, Cl ou Br, l'un des trois au moins devant être l'hydrogène, X désignant H, F, Cl ou Br et $R^9$ l'hydrogène ou un alkyle en $C_1$-$C_{10}$,

Y représente H, $CH_3$ ou F,

$R^1$ un alkyle ou un alcényle ayant de 1 ou 2 à 16 atomes de carbone, linéaires ou ramifiés et avec ou sans carbone asimétrique, un ou deux groupes $-CH_2-$ non-voisins pouvant être également remplacés par -O-, -S-, -CO-, -CO-O-, ou -O-CO-O- et de l'hydrogène pouvant être aussi remplacé par du fluor, ou bien l'un des radicaux suivants

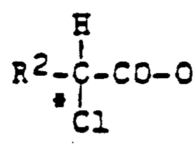 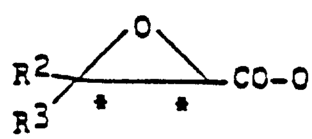 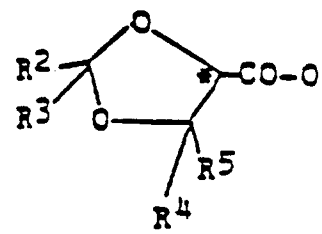

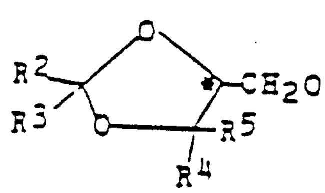 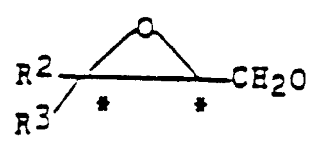 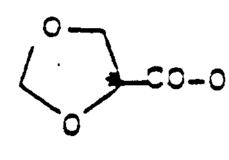

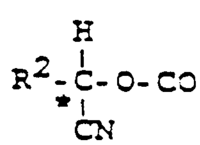 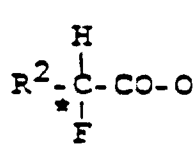 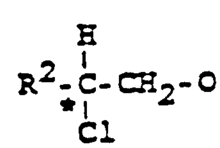

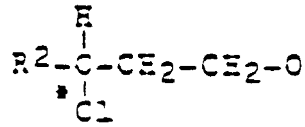 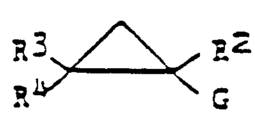

$R^2$, $R^3$, $R^4$ et $R^5$ étant l'hydrogène ou des alkyles linéaires ou ramifiés ayant de 1 à 16 atomes de carbone ou des alcényles linéaires ou ramifiés ayant de 2 à 16 atomes de carbone, dont aussi un groupe $-CH_2-$ peut être remplacé par un atome d'oxygène ou un groupe -CO-O- ou -O-CO-, ou bien $R^2$

ou $R^3$ et/ou $R^4$ et $R^5$, respectivement, forment ensemble un cycloalkyle ayant de 3 à 8 atomes de carbone,

a est un nombre de 2 à 20 de préférence de 6 à 12,

b, c, d, e et f sont chacun le nombre 0 ou 1 avec la condition que la somme $d+e+f = 2$ ou 3,

$A^1$, $A^2$ et $A^3$, qui peuvent être identiques ou différents les uns des autres, représentent chacun un groupe 1,4-phénylène dont 1 ou 2 hydrogènes peuvent être remplacés par du fluor, du chlore et/ou un groupe CN, un groupe trans-1,4-cyclohexylène dont 1 ou 2 hydrogènes peuvent être remplacés par F, Cl, CN et/ou $CH_3$, ou encore un groupe pyrazine-2,5-diyle, pyridazine-3,6-diyle, pyridine-2,5-diyle, pyrimidine-2,5-diyle, (1,3,4)-thiadiazole-2,5-diyle, 1,3-dioxane-2,5-diyle, ou 1,3-dithiane-2,5-diyle,

$M^2$ et $M^3$, identiques ou différents, sont chacun un groupe CO-O, O-CO, CO-S, S-CO, $CH_2$-O ou O-$CH_2$,

$M^1$ représente O,

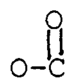 ou 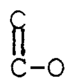

et

G un alkylène linéaire ou ramifié ayant de 1 à 16 atomes de carbone ou un alcénylène linéaire ou ramifié ayant de deux à 16 atomes de carbone, dont aussi un ou deux groupes -$CH_2$-non-voisins peuvent être remplacés par -O-, -S-, -O-CO-, -CO-O-, S-CO- ou -CO-S-.

**2.** Polymères en cristaux liquides ferroélectriques formés des motifs de formule (I) selon la revendication 1 dans lesquels le groupe
$(-A^1)_b(M^2)_c(-A^3)_d(-M^3)_e(-A^3)_f$- est l'un des suivants :

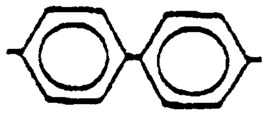 , 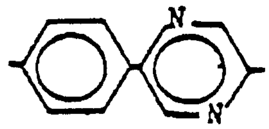 , 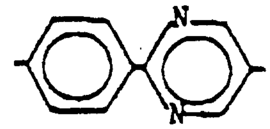 ,

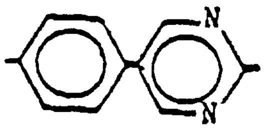 , 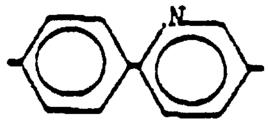 , 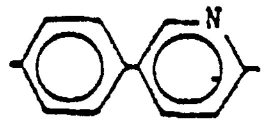 ,

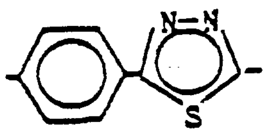 , 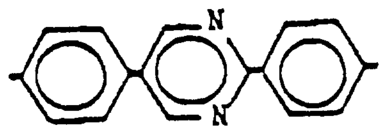 ,

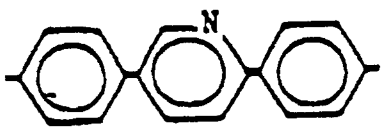 , 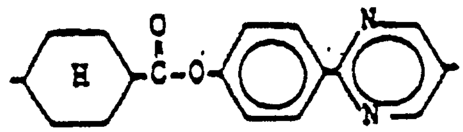 ,

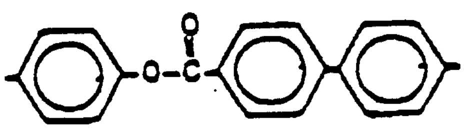 , 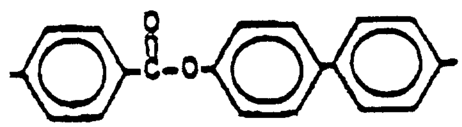 ,

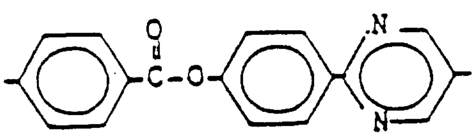 , 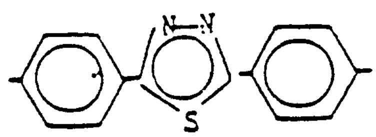 ,

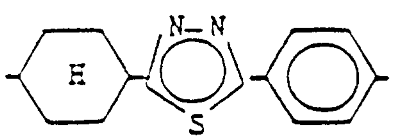 , 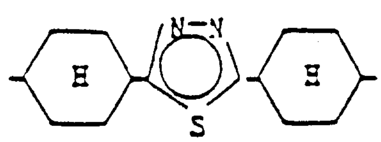 ,

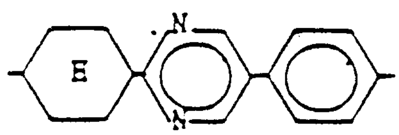 , 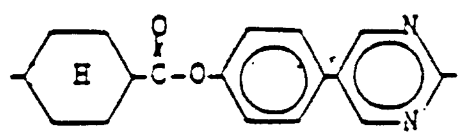

**3.** Polymères en cristaux liquides ferroélectriques formés des motifs de formule (I) selon la revendication 1 dans lesquels
B a la signification donnée à la revendication 1,

Y représente H ou $CH_3$,
$R^1$ un alkyle ou un alcényle linéaire ou ramifié ayant de 2 à 16 atomes de carbone, avec ou sans carbone asimétrique, dont aussi un ou deux groupes $-CH_2-$ non-voisins peuvent être remplacés par -O-, -S-, -CO-, -CO-O-, -O-CO- ou -O-CO-O- et dont également de l'hydrogène peut être remplacé par du fluor, ou bien le radical

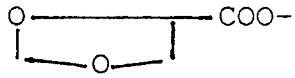

a est un nombre de 2 à 20, de préférence de 6 à 12, et le groupe $(-A^1)_b(-M^2)_c-(A^2)_d(-M^3)_e(-A^3)_f-$ l'un des suivants :

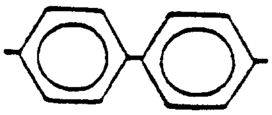 , 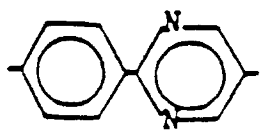 , 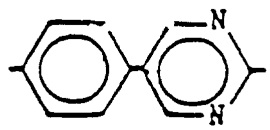 ,

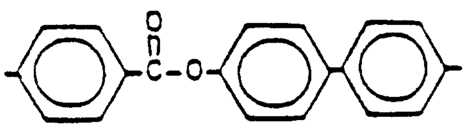 , 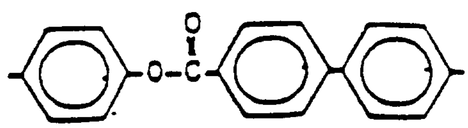 ,

4. Copolymères en cristaux liquides ferroélectriques formés de deux ou plus motifs différents de formule (I) selon la revendication 1.

5. Procédé de préparation des polymères selon l'une des revendications 1 à 4, procédé caractérisé en ce que l'on polymérise des composés de formule (II)

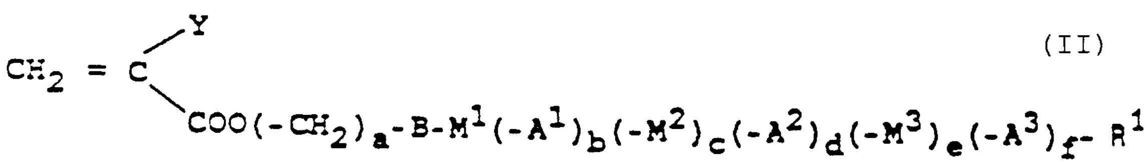

(II)

au moyen de formateurs de radicaux libres,
les divers symboles ayant les significations qui ont été indiquées aux revendications 1 à 3.

6. L'emploi de polymères en cristaux liquides ferroélectriques selon l'une des revendications 1 à 4 dans des éléments ou pièces électro-optiques.

7. Eléments ou pièces électro-optiques comprenant un polymère selon l'une des revendications 1 à 4.